# EUROPEAN PATENT SPECIFICATION

(11) **EP 1 294 568 B1**
(45) Date of publication and mention of the grant of the patent: **24.11.2004**
(21) Application number: 01947359.4
(22) Date of filing: 11.06.2001
(51) Int. Cl.: B41M 3/00, B41M 7/00, B41M 5/38, B29D 11/00, G02C 7/04, G03C 7/30, G03G 7/00, B41M 3/14, B41M 5/00

(54) **PRINTING COLORED CONTACT LENSES**
FARBDRUCK AUF KONTAKTLINSEN
PRODUCTION DE LENTILLES DE CONTACT COLOREES PAR IMPRESSION

(30) Priority: 12.06.2000 US 211024 P; 20.06.2000 US 213217 P
(43) Date of publication of application: 26.03.2003
(73) Proprietor: Novartis AG, 4056 Basel (CH)
(72) Inventor: TUCKER, Robert, C., Arlington Heights, IL 60004 (US)
(74) Representative: Gros, Florent
(86) International application number: PCT/EP2001/006597
(87) International publication number: WO 2001/096908

(56) References cited:
- WO-A-01/40846
- PATENT ABSTRACTS OF JAPAN vol. 1996, no. 09, 30 September 1996 (1996-09-30) & JP 08 112566 A (SEIKO EPSON CORP), 7 May 1996 (1996-05-07)
- PATENT ABSTRACTS OF JAPAN vol. 1998, no. 11, 30 September 1998 (1998-09-30) & JP 10 171994 A (OKI ELECTRIC IND CO LTD), 26 June 1998 (1998-06-26)

## Description

### BACKGROUND OF THE INVENTION

For cosmetic purposes, contact lenses having one or more colorants dispersed in the lens or printed on the lens are in high demand. These colored contact lenses enhance the natural beauty of the eye, or provide unique patterns on the iris of the wearer.

Presently, methods of printing inks onto contact lenses involve cliche ink transfer printing. A typical example of this printing follows. An image is etched into metal to form a cliche. The cliché is placed on a printer. Once on the printer, the cliché is inked by either an open inkwell doctoring system or by a closed ink cup sliding across the image. Then, a silicone pad picks up the inked image from the cliché and transfers the image to the contact lens. The silicone pads are made of a material comprising silicon that can vary in elasticity. The properties of the silicone material permit the inks to stick to the pad temporarily and fully release from the pad when it contacts the contact lens.

There are several disadvantages associated with using cliché ink transfer printing to color contact lenses. This method lacks consistency. Slight differences in the silicone pad can cause wide variation in image quality, effecting dot resolution and color reproducibility. Further, multiple color layering is difficult and time consuming. Further still, the design and printing process using this method is slow. After an image is fully designed, it can take about two weeks before that image is etched onto a cliché. The set-up is painstakingly detailed and lengthy when more than one color is going to be printed on the lens using this method. Presently, only three overlays of color can be applied using this printing method. The difficulty and slowness of this printing method inhibits business strategies,
making it difficult to offer consumers a chance to design and print their own contact lenses at the point of purchase.

Examples of inkjet printing methods are disclosed in JP 08 112566 A, JP 10 171994 A and non-prepublished WO 01 40846. However there is still a need for a simple, quick, and highly precise printing apparatus and method capable of producing high quality images on contact lenses in a consistent manner especially when multiple colors are being printed. Preferably a printing apparatus and method should permit consumers to design and print their own contact lenses when they purchase those lenses.

### SUMMARY OF THE INVENTION

The products and processes of the present invention address at least some of the difficulties in the prior art.

In one aspect of the invention, a method of making a colored contact lens comprises printing at least one layer of a colorant onto a contact lens using ink jet printing.

The method comprises the steps of: transporting a contact lens into an ink jet printer having a plurality of nozzles, wherein each nozzle is sized to form drops having a volume of less than 100 picoliters of a colorant, and wherein the ink jet printer is capable of printing, on the surface of the contact lens, pixels which are less than 150 µm (microns) in diameter, and printing a pattern on the surface of the contact lens by, under control of a computer, dispensing droplets of the colorant from one or more nozzles, onto the surface of the contact lens.

The present invention provides the foregoing and other features, and the advantages of the invention will become further apparent from the following detailed description of the presently preferred embodiments. The detailed description is merely illustrative of the invention and does not limit the scope of the invention, which is defined by the appended claims and equivalents thereof.

### DETAILED DESCRIPTION

### DEFINITIONS

"Colorant" means either a dye or a pigment or a mixture thereof.

"Dye" means a substance that is soluble in a solvent and that is used to impart color. Dyes are typically translucent and absorb but do not scatter light. Dyes can cover both optical regions of contact lenses and non-optical regions of contact lenses.

"Fluorescence" means luminescence caused by absorption of visible light or ultraviolet radiation at one wavelength followed by nearly immediate emission at a longer wavelength. Fluorescent emission ceases almost immediately when the light or incident ultraviolet radiation stops.

"Monomer" means low molecular weight compounds that can be polymerized. Low molecular weight typically means average molecular weights less than 700 Daltons. The term "monomer" also refers to medium and high molecular weight compounds or polymers, sometimes referred to as macromonomers, (that is, typically having number average molecular weights greater than 700) containing functional groups capable of further polymerization.

"Pearlescence" means having a pearly luster; resembling a pearl in physical appearance; or having a nearly neutral slightly bluish medium gray color.

"Phosphorescence" is luminescence caused by the absorption of radiation at one wavelength followed by delayed emission at a different wavelength. Phosphorescent emission continues for a prolonged time after the incident radiation stops.

"Pigment" means a powdered substance that is suspended in a liquid in which it is relatively insoluble. Pigments are used to impart color. Because pigments are in the form of a suspension, they tend to have an opacity quality. That is, they reflect light and obstruct the passage of light. For this reason, it is preferred that pigments are located in non-optical regions of a contact lens.

"Polymer" means a material formed by polymerizing one or more monomers.

### THE CONTACT LENSES

The methods of the present invention involve printing a colorant onto a contact lens using ink jet printing. The image is preferably a digital image, but it can also be an analog image.

In one embodiment, the contact lenses are transparent before they are printed upon. In another embodiment, the contact lenses are tinted prior to being printed upon. That is, a colorant may have been dispersed in that lens using methods that are well known in the art before that lens is printed upon using digital technology. In another embodiment, the contact lenses that are going to be printed upon can optionally have been pre-printed using methods that are well known in the art. The well known methods include the one disclosed in U.S. Patent No. 5,116,112. This method involves coating a colored liquid (which is either thermosetting or thermoplastic) in a mold for making a contact lens onto a surface thereof where the iris portion of the lens is formed to produce a colored film providing a pattern thereon which film contains a surface exposed to the interior of the mold and a surface in contact with the mold; and charging the mold with the lens-forming liquid used to form the body of the lens while maintaining the colored film in the iris portion and configuring the lens-forming liquid about the colored film whereby the surface of the film becomes integral with the body of the lens and surface of the film becomes part of the outer surface of the lens when the molded lens is removed from the mold.

### INK JET PRINTING

Preferably, the colorant applied to the contact lens using an ink jet printer is an ink. A preferred ink contains at least one dye. Nearly any dye can be used in the present invention, so long as it can be used in an ink jet printer. These dyes include fluorescent dyes, phosphorescent dyes, pearlescent dyes, and conventional dyes.

A preferred ink contains at least one pigment. Nearly any pigment can be used in the present invention, so long as it can be used in an ink jet printer. Preferred pigments include fluorescent pigments, phosphorescent pigments, pearlescent pigments, and conventional pigments. Pigments can include any colorant permitted in medical devices and approved by the FDA, such as D&C Blue No. 6, D&C Green No. 6, D&C Red No. 17, D&C Violet No. 2, D&C Yellow No. 10, carbazole violet, certain copper complexes, certain chromium oxides, various iron oxides, phthalocyanine green, titanium dioxides, etc. See Marmiom DM Handbook of U.S. Colorants for a list of colorants that may be used with the present invention.

The pigment should be much smaller than the orifice in an ink jet nozzle to prevent clogging during the printer process. Generally, this means that preferred pigments are 3 µm (microns) or smaller. Larger pigments can be ground into smaller particles to reduce potential clogging. Preferred methods of reducing a pigment's particle size include high speed mixers, Kady Mills, colloid mills, homogenizers, microfluidizers, sonalators, ultrasonic mills, ball mills, roller mills, vibrating ball mills, attritors, sand mills, varikinetic dispensers, three-roll mills, Banbury mixers, or other methods well known to those of skill in the art.

The preferred ink has a surface tension of at least 35 mN/m. Any surface tension parameter is acceptable so long as the ink jets adequately spreads when it contacts the lens. Preferably, the ink breaks into well-defined streams of droplets based upon its surface tension. The surface tension of the ink can be adjusted by adding or removing diluents or surfactants.

It is preferred, but not necessary, that the ink dry in less than 5 seconds. It is preferred that the ink adhere to the lens and that the lens retain its shape after being treated in an autoclave.

A preferred ink has organic solvents. Preferred solvents require some polarity to dissolve a binder. Preferred solvents have few functional groups that compete with the isocyanate cross-linking system such as alcohol groups, amine groups, and acid groups. A preferred ink can contain many solvents, including glycols, ketones or esters. Cyclopentanone is a particularly preferred solvent. A preferred ink could optionally contain humectants (e.g., ethylene glycol) and surfactants.

It is also preferred, for continuous ink jet operation, that the ink is charged by an electrode to drop away from the gutter and onto the printing surface. This can be achieved by many ways well known in the art, including by adding 0.5% by weight of a salt.

The preferred ink flows easily in ink jet applications. Preferably, the ink has a viscosity of from 1 to 50 Nsm⁻² (centipoises). More preferably, the viscosity is from 2 to 30 Nsm⁻² (centipoises). Most preferably, the viscosity is between 5 and 15 Nsm⁻² (centipoises).

The colorants can be printed in a single layer or in many layers, and in any pattern that achieves desirable cosmetic effects. Preferred patterns of colorants include those identified in U.S. Patent Nos. 5,936,705; 5,414,477; and 5,272,010.

The patterns that the single or multiple layers of colorants form on the contact lenses are preferably comprised of zones, and the zones may be comprised of shaped colored regions within the zones. The shaped region may further be comprised of dots. Examples of zones include: a single annular iris color zone with irregular inner and outer borders, multiple concentric annular zones, annular zones with outer and inner starbursts, and a single iris zone but irregular in structure along multiple radial lines. Examples of shaped colored areas within zones include circular areas, ovular regions, irregular elongated regions in worm-like shapes, radial segments, and combinations of these shapes.

The addition of surfactants, particularly ionic surfactants, may be helpful for optimal color dispersion.

In a preferred embodiment, the colored contact lens is coated with a binding solution. Binding can occur during or after printing. It is preferred that the binding solution be applied to only those regions of the contact lens that are not in the optical zone, or the zone of the contact lens through which one sees.

The process of coating the contact lens can be done by any method that is well known in the art. In one embodiment, the binding solution could be sprayed onto the lens. If this method is used, a mask should be placed over the optical zone of the lens before spraying occurs. In another embodiment, the binding solution could be coated onto the lens using printing pads.

The preferred solvent of the binding solution depends upon the method of coating used. If the spraying method of coating is used, the solvent should have a low viscosity. That is, it is preferred that the viscosity be less than 50 Nsm⁻² (centipoises). If the printing pad method of coating is used, the solvent should have a higher viscosity. That is, it is preferred that the viscosity be greater than 100 Nsm⁻² (centipoises). Viscosity can be adjusted by the addition or subtraction of polymer chains or by the addition or subtraction of a solvent. Organic mixtures are the preferred solvents.

Preferably the binding solution comprises at least one monomer. More preferably, the binding solution comprises at least one hydrophilic monomer and at least one hydrophobic monomer. Nearly any hydrophilic monomer that can act as a plasticizer can be used. The hydrophilic monomer can allow the printed material to deform with the lens without cracking. Among the preferred hydrophilic monomers are 2-hydroxyethyl methacrylate (HEMA), n-vinylpyrolidone (NVP), glycerylmethacrylate (GMA), and N,N-dimethyacrylamide (DMA). This list is exemplary, not limiting.

Nearly any hydrophobic monomer can be used to improve the strength of the coating and to improve the solubility of the monomer in organic solvents. Among the preferred hydrophobic monomers are 2-ethoxyethyl methacrylate (EOEMA), methyl methacrylate (MMA), and n-butyl methacrylate (BMA). This list is exemplary, not limiting.

Preferably, the binding solution contains an initiator. Preferably, a UV or heat-activiting initiator is used.

Preferably, the binding solution makes a tightly cross-linked film that traps the colorants in the film. For this, it is preferable to add ethylene glycol dimethacrylate. Hexamethylenediisocyanate (HMDI) is another preferred crosslinker. This list is exemplary, not limiting. Swelling agents are preferably used to allow penetration of the monomer into the contact lens and they improve adhesion. Preferred swelling agents include cyclopentanone, cyclohexanone, or methyl ethyl ketone. This list is exemplary, not limiting.

Preferably, the binding solution contains an adhesion promoter. Preferably, the adhesion promoter is HMDI. Nearly any adhesion promoter can be used, including those disclosed in U.S. Patent No. 5,272,010.

Preferably, the binding solution contains a chain transfer agent. Preferably, the chain transfer agent is mercaptoethanol.

Any ink jet printer can be used with the present invention so long as it can be configured to print the inks as described above on contact lenses that have curved surfaces. The TRIDENT OPTIJET 2 printhead is a preferred printhead available from the Trident Corp. in Park Ridge, Illinois.

A preferred ink jet printer is either drop-on-demand (DOD) or continuous-jet. Many continuous ink jet printers could be used, from companies such as Domino-Amjet, Videojet, Scitex Digital Printing, Willet, Linx, Iris Graphics, Stork, and Dupont. Many DOD printers could be used, from companies such as Epson, Xaar, Hitachi, Spectra, Tektronix, Canon, Hewlett-Packard, Lexmark, Olivetti, Xerox, Panasonic, VUTEk, and NEC.

The ink jet printer can print pixels of less than 150 µm (microns) in diameter, preferably less than 100 µm (microns) in diameter. Pixel size is measured using standard microscopy techniques, which are well known to those of skill in the art. A preferred ink jet printer can space the pixels less than 80 µm (microns) from each other, preferably less than 50 µm (microns) from each other. To achieve this result, the drops of ink that are emitted from the nozzle have a volume of less than 100 picoliters, preferably less than 50 picoliters, and more preferably, less than 10 picoliters.

A preferred ink jet nozzle is sized to form drops of the preferred volume given the ink viscosity and thermal forces. Preferably, the nozzles can face perpendicular to the lens surfaces, forming a hemisphere around the lens. Alternatively, the lens surface could be rotated. It might also be useful to index the printer head with the lens rotator for non-radially symmetrical lenses with a non-symmetrical pattern.

In a preferred embodiment, the ink jet heads are controlled through the use of a computer.

In a preferred embodiment, batch processing could be used to print many contact lenses in rapid succession. For example, a batch of eight lenses (one palate) could be sent to eight printer heads. Lifts push the lens cup to put it in the vicinity of the printer heads. The cups could be rotated in a controlled fashion. The print heads would jet on and off based upon instructions sent from the computer software. The lifts would then lower the lenses back on their palate. Then, the palate would be sent through a system to print or spray the binding solution over the lenses. Then, the lenses would be sent to a curing process to heat and dry the lenses.

Through routine experimentation, one of ordinary skill in the art can optimize the process of printing colorants onto contact lenses using various quantifiable analytical techniques.

### EXEMPLARY USES OF DIGITAL PRINTING

Digital printing methods of the present invention can find use in printing on contact lenses cosmetic patterns including iris-like patterns, WILD EYE® patterns, made-to-order (MTO) patterns, and the like. Design changes in cosmetic patterns can be implemented easily, especially across different lens materials and products. The pattern printed by digital printing methods of the present invention can have improved resolution and may be richer in detail. Digital printing methods of the present invention also allow customers to design any images or patterns to be printed.

Digital printing methods of the present invention can also find use in printing on contact lenses inversion marks. Currently, an inversion mark that allows a user to handle and insert easily a contact lens, for example, a FRESHLOOK® contact lens (Wesley Jessen Corporation). The printed inversion mark is easier to identify and use than other inversion marks made by non-printing methods including etching, positively molding, or laser etching. The printed inversion marks could also provide stronger lenses, since no material is removed and removal of materials from lenses could cause stress propagation sites. In addition, the printed inversion mark may have less adverse impact on wear comfort, especially with a print-on-mold system. Potentially all contact lens can be printed with an inversion mark. The digital printing methods and systems of the present invention can print inversion marks rapidly, potentially faster than pad printing.

Digital printing methods of the present invention can also find use in printing on contact lenses stock keeping units (SKUs). Material handling and packaging is always an issue with a large number of SKUs. The digital printing system may allow SKU codes, either in forms of numbers or as bar codes, to be printed either on a mold or in small print on a contact lens itself. In a preferred embodiment, small prints of SKU codes is blended in with an iris pattern or any other cosmetic pattern or inversion marks. In another preferred embodiment, SKU codes is printed discretely in black to be hidden by the iris or in white to be hidden by the sclera. In a further preferred embodiment, an iris pattern is coded to represent SKUs, for example, two thick striations followed by two thin striations represents lenses having a prescription of -3.00 D. By printing SKU codes on contact lenses, the digital printing systems of the invention can aid in monitoring product flow and in verifying product identity in the manufacturing contact lenses. There would be fewer labeling mistakes since every lens could be identified quickly.

Digital printing methods of the present invention can further find use in printing identity verification marks on contact lenses. By printing an identity code, such as a bar code, number code, special iris pattern, or any other coding system, onto a contact lens, the identity of a contact lens wearer can be verified by reading the identity code with a simple camera system, preferably the camera system having colored filters. Preferably, the identity codes are printed on contact lenses with fluorescent or phosphorescent inks. Such a system can be used for access to buildings, secure rooms, home security system, ATMs, internet sites, and the like. A potential advantage of using this system is that only a person with the correct eye prescription can use the ID coded contact lens.

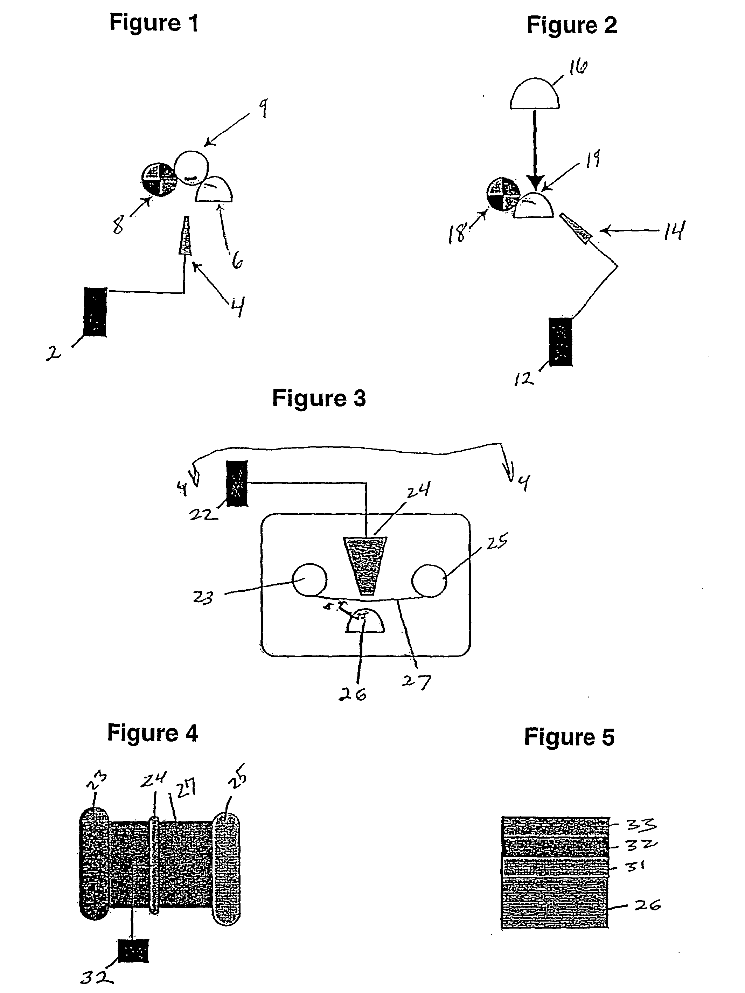

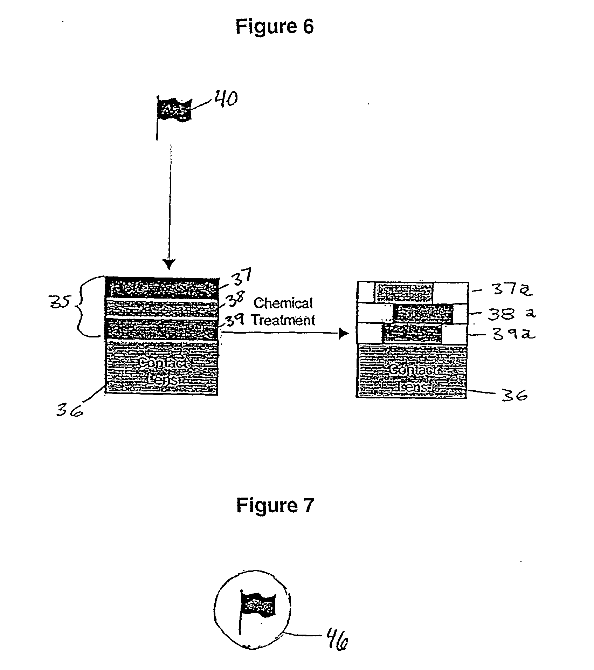

## Claims

1. A method of making a colored contact lens, the method comprising the steps of:
transporting a contact lens into an ink jet printer having a plurality of nozzles, wherein each nozzle is sized to form drops having a volume of less than 100 picoliters of a colorant, and wherein the ink jet printer is capable of printing, on the surface of the contact lens, pixels which are less than 150 µm (microns) in diameter, and
printing a pattern on the surface of the contact lens by, under control of a computer, dispensing droplets of the colorant from one or more nozzles, onto the surface of the contact lens.

2. The method of claim 1, wherein the nozzles face perpendicular to the surface of the contact lens to be printed and form a hemisphere around the contact lens.

3. The method of claim 1, wherein the printing step comprises, under control of the computer, dispensing droplets of the colorant from one or more nozzles, onto the surface of the contact lens while rotating the contact lens.

4. The method of claim 1, wherein the colorant is an ink comprising at least one pigment, and wherein the ink is **characterized by** being capable of drying in less than 5 second, by having a viscosity of from 1 to 50 Nsm⁻² (centipoises), and by being capable of adhering to the contact lens and retaining the shape of the contact lens after being treated in an autoclave.

5. The method of claim 1, 2, 3, or 4, further comprising printing an additional pattern by, under control of the computer, dispensing droplets of an additional colorant from one or more nozzles, onto the surface of the contact lens.

6. The method according to any one of claims 1 to 5, further comprising coating the lens with a binding solution.

7. The method of claim 6, wherein the coating is done during printing.

8. The method of claim 6, wherein the coating is done after printing.

9. The method of claim 6, wherein the binding solution comprises at least one monomer.

10. The method of claim 6, wherein the binding solution comprises at least one hydrophilic monomer and at least one hydrophobic monomer.

11. The method of claim 10, wherein the binding solution comprises 2-hydroxyethyl methacrylate and 2-ethoxyethyl methacrylate.

12. The method of claim 9, wherein the binding solution further comprises an adhesion promoter.

13. The method according to any one of claims 1 to 12, wherein the coating is applied to the contact lens only in regions that are not in an optical zone.

## Patentansprüche

1. Verfahren zur Herstellung einer gefärbten Kontaktlinse, wobei das Verfahren die Schritte umfasst:
Transportieren einer Kontaktlinse in einen Tintenstrahldrucker mit einer Vielzahl von Düsen, wobei jede Düse bemessen ist, um Tropfen mit einem Volumen von weniger als 100 Pikolitern eines Färbemittels zu bilden, und wobei der Tintenstrahldrucker in der Lage ist, Pixel auf die Oberfläche der
Kontaktlinse zu drucken, die einen kleineren Durchmesser als 150 µm (Mikrometer) aufweisen, und
Drucken eines Musters auf die Oberfläche der Kontaktlinse, .indem unter der Steuerung eines Computers Tröpfchen des Färbemittels aus einer oder mehreren Düsen auf die Oberfläche der Kontaktlinse ausgegeben werden.

2. Verfahren nach Anspruch 1, wobei die Düsen der Oberfläche der zu bedruckenden Kontaktlinse senkrecht zugewandt sind und eine Halbkugel um die Kontaktlinse bilden.

3. Verfahren nach Anspruch 1, wobei der Druckschritt Ausgeben von Tröpfchen des Färbemittels aus einer oder mehreren Düsen unter der Steuerung des Computers auf die Oberfläche der Kontaktlinse, während die Kontaktlinse gedreht wird, umfasst.

4. Verfahren nach Anspruch 1, wobei das Färbemittel eine Tinte mit mindestens einem Pigment ist und wobei die Tinte **dadurch gekennzeichnet ist, dass** sie in der Lage ist, in weniger als 5 Sekunden zu trocknen, dass sie eine Viskosität von 1 bis 50 Nsm⁻² (Centipoise) aufweist, und dass sie in der Lage ist, an der Kontaktlinse zu haften und die Form der Kontaktlinse beizubehalten, nachdem sie in einem Autoklaven behandelt wird.

5. Verfahren nach Anspruch 1, 2, 3 oder 4, welches weiterhin Drucken eines zusätzlichen Musters durch Ausgeben von Tröpfchen eines zusätzlichen Färbemittels aus einer oder mehreren Düsen unter der Steuerung des Computers auf die Oberfläche der Kontaktlinse umfasst.

6. Verfahren nach einem der Ansprüche 1 bis 5, welches weiterhin Beschichten der Linse mit einer Bindemittellösung umfasst.

7. Verfahren nach Anspruch 6, wobei das Beschichten während des Druckens durchgeführt wird.

8. Verfahren nach Anspruch 6, wobei das Beschichten nach dem Drucken durchgeführt wird.

9. Verfahren nach Anspruch 6, wobei die Bindemittellösung mindestens ein Monomer umfasst.

10. Verfahren nach Anspruch 6, wobei die Bindemittellösung mindestens ein hydrophiles Monomer und mindestens ein hydrophobes Monomer umfasst.

11. Verfahren nach Anspruch 10, wobei die Bindemittellösung 2-Hydroxyethylmethacrylat und 2-Ethoxyethylmethacrylat umfasst.

12. Verfahren nach Anspruch 9, wobei die Bindemittellösung weiterhin einen Haftpromotor umfasst.

13. Verfahren nach einem der Ansprüche 1 bis 12, wobei die Beschichtung auf die Kontaktlinse nur in Bereichen aufgebracht wird, die nicht in einer optischen Zone liegen.

## Revendications

1. Procédé de fabrication d'une lentille colorée, ce procédé comprenant les étapes suivantes :
- transfert d'une lentille de contact dans une imprimante à jet d'encre dotée de plusieurs injecteurs, **caractérisée en ce que** chacun de ces injecteurs est calibré de façon à former des gouttes dont le volume est inférieur à 100 picolitres de colorant et **en ce que** l'imprimante à jet d'encre est capable d'imprimer, sur la surface de la lentille de contact, des pixels inférieurs à 150 µm (microns) de diamètre, et
- impression d'un modèle sur la surface de la lentille de contact par dispersion, sous contrôle d'un ordinateur, de gouttelettes de colorants par un ou plusieurs injecteurs sur la surface de la lentille de contact.

2. Procédé selon la revendication 1, **caractérisé en ce que** les injecteurs sont placés perpendiculairement par rapport à la surface de la lentille de contact à imprimer et forment un hémisphère autour de la lentille de contact.

3. Procédé selon la revendication 1, **caractérisé en ce que** l'étape d'impression comprend, sous contrôle d'un ordinateur, une étape de dispersion des gouttelettes de colorant par un ou plusieurs injecteurs sur la surface de la lentille de contact alors que celle-ci est soumise à une rotation.

4. Procédé selon la revendication 1, **caractérisé en ce que** le colorant est une encre comprenant au moins un pigment et **en ce que** l'encre est capable de sécher en moins de 5 secondes étant donné que sa viscosité va de 1 à 50 Nsm⁻² (centipoises) et est capable d'adhérer sur la lentille de contact et de conserver la forme de la lentille de contact après avoir été traitée dans un autoclave.

5. Procédé selon la revendication 1, 2, 3 ou 4 comprenant également l'impression d'un modèle supplémentaire, sous contrôle d'un ordinateur, par dispersion des gouttelettes d'un colorant supplémentaire à partir d'un ou plusieurs injecteurs sur la surface de la lentille de contact.

6. Procédé selon l'une des revendications 1 à 5 comprenant également l'enrobage de la lentille avec une solution liante.

7. Procédé selon la revendication 6, **caractérisé en ce que** l'enrobage est réalisé pendant l' impression.

8. Procédé selon la revendication 6, **caractérisé en ce que** l'étape d'enrobage est réalisé après l'impression.

9. Procédé selon la revendication 6, **caractérisé en ce que** la solution liante comprend au moins un monomère.

10. Procédé selon la revendication 6, **caractérisé en ce que** la solution liante comprend au moins un monomère hydrophile et au moins un monomère hydrophobe.

11. Procédé selon la revendication 10, **caractérisé en ce que** la solution liante comprend le méthacrylate de 2-hydroxyéthyle et le méthacrylate de 2-éthoxéthyle.

12. Procédé selon la revendication 9, **caractérisé en ce que** la solution liante comprend un promoteur d'adhésion.

13. Procédé selon l'une des revendications 1 à 12, **caractérisé en ce que** l'enrobage est appliqué sur la lentille de contact uniquement dans les endroits qui ne se trouvent pas dans une zone optique.
